# EUROPÄISCHE PATENTSCHRIFT

(11) **EP 1 620 932 B1**
(45) Veröffentlichungstag und Bekanntmachung des Hinweises auf die Patenterteilung: **18.05.2011**
(21) Anmeldenummer: 04712998.6
(22) Anmeldetag: 20.02.2004
(51) Int. Cl.: H02K 1/14

(54) **ELEKTRISCHE MASCHINE**
ELECTRIC MACHINE
MACHINE ELECTRIQUE

(30) Priorität: 29.04.2003 DE 10319190
(43) Veröffentlichungstag der Anmeldung: 01.02.2006
(73) Patentinhaber: ROBERT BOSCH GMBH, 70442 Stuttgart (DE)
(72) Erfinder: EVANS, Steven-Andrew, 77813 Buehl (DE); MECROW, Barrie, C., Whitley Bay, Tyne and Wear NE25 9UY (GB); JACK, Alan, G., Hexham, Northumberland NE46 2NB (GB)
(86) Internationale Anmeldenummer: PCT/DE2004/000317
(87) Internationale Veröffentlichungsnummer: WO 2004/098023

(56) Entgegenhaltungen:
- FR-A- 1 175 122
- US-A- 6 087 755
- US-A- 6 140 726
- US-B1- 6 188 159

## Beschreibung

### Stand der Technik

Die Erfindung geht aus von einer elektrischen Maschine mit einem feststehenden Hauptelement als Stator und einem rotierenden Hauptelement als Rotor, von denen eines aus SMC-Material hergestellt ist, nach dem Oberbegriff des Anspruchs 1.

Die magnetische leitfähigen Körper von Statoren oder Rotoren elektrischer Maschinen werden in naher Zukunft zunehmend aus SMC-Material (Soft Magnetic powder iron Composite) hergestellt und werden die laminierten Eisenkörper oder Blechpakete verdrängen, da sie fertigungstechnisch sehr viel einfacher herstellbar sind. Das SMC-Material wird mittels einer Pressform in die gewünschte Form gepresst und dann bei einer relativ niedrigen Temperatur wärmebehandelt, damit die notwendigen isolierenden Schichten zwischen den Pulverpartikeln nicht zerstört werden.

Bei einem bekannten mehrpoligen Stator aus SMC-Material für eine Innenläufermaschine (WO 99/50949) ist das außenliegende Rückschlussjoch aus einer der Polzahl der Statorpole entsprechenden Anzahl von Jochsegmenten zusammengesetzt. Jedes Jochsegment trägt einstückig einen Statorpol mit einem Polschenkel und einem den Polschenkel an dessen jochfernem Ende begrenzenden Polschuh. Jedes Jochsegment mit Polschenkel und Polschuh ist aus SMC-Material durch Pressen und Wärmebehandlung hergestellt. Die Polschenkel sind an ihren axialen Enden abgerundet oder weisen ein ovales Profil auf, so dass infolge Wegfall von scharfen Kanten an den Polschenkeln nur eine dünne Isolierschicht aufgebracht werden muss, auf die dann die Polwicklung aufgewickelt werden kann. Die einzelnen Polwicklungen der Statorwicklung werden direkt auf die Polschenkel mit herkömmlicher, maschineller Wickeltechnik aufgewickelt. Nach Aufwickeln der Polwicklungen werden die einzelnen Jochsegmente in Umfangsrichtung aneinandergesetzt und fest miteinander verbunden.

Bei einem ebenfalls bekannten Stator aus SMC-Material für eine Innenläufermaschine (WO 00/69047) werden das ringförmige Rückschlussjoch einerseits und die Statorpole mit Polschenkel und Polschuh andererseits getrennt aus SMC-Material in der gewünschten Form hergestellt. Nach Aufschieben der als Ringspulen vorgefertigten Polwicklungen auf die Polschenkel werden die Statorpole mit den polschuhfernen Enden der Polschenkel in vorbereitete Ausnehmungen im Rückschlussjoch formschlüssig eingesetzt und an diesem befestigt.

Die Dokumente US 6 140 726, US 6 087 755 und FR 1 175 122 offenbaren weitere, zum Stand der Technik gehörende elektrische Maschinen.

### Vorteile der Erfindung

Die erfindungsgemäße elektrische Maschine mit den Merkmalen des Anspruchs 1 hat den Vorteil, dass das aus SMC-Material bestehende Hauptelement der elektrischen Maschine, z.B. der Rotor eines Kommutatormotors oder der Stator eines bürstenlosen Gleichstrom- oder Synchronmotors, eines Asynchronmotors, eines geschalteten Reluktanzmotors oder eines Synchron-Reluktanzmotors, nur aus äußerst wenigen Modulen zusammengesetzt ist, die fertigungstechnisch günstig aus SMC-Material gepresst werden können. Die Module werden vorzugsweise aus einem SMC-Pulver mit einer Dichte von 7,3g/cm³ oder höher gepresst, um die geforderten magnetischen Eigenschaften zu erreichen, und anschließend für ca. 30 min einer Temperatur von ca. 500°C ausgesetzt, um auch akzeptable mechanische Eigenschaften zu erhalten. Das Hauptelement lässt sich dabei mit allen üblichen Polzahlen darstellen.

Im Gegensatz zu der in Umfangsrichtung vorgenommenen Zusammensetzung der aus SMC-Material gepressten Jochsegmente beim Stand der Technik, ist das axiale Zusammensetzen von nur zwei oder drei Modulen fertigungstechnisch unproblematisch, da anders als beim Stand der Technik keine Fliehkräfte auf die Verbindungsstellen zwischen den zusammengesetzten Teilen wirken. Das Festlegen der Module aneinander kann beispielsweise durch einfaches Kleben oder mechanisches Klemmen vorgenommen werden. Die Aufteilung des Hauptelements in zwei oder drei oder mehrere Module mit jeweils nur einem Teil der Gesamtpolzahl ermöglicht die Bewicklung der einzelnen Pole mit den als Einzelspulen ausgebildeten Polwicklungen in herkömmlicher Wickeltechnik auf herkömmlichen Wickelautomaten, da die Pollücken zwischen den Polen in jedem Modul durch das Fehlen der jeweils den anderen Modulen zugeordneten Polen ausreichend groß für das Hindurchführen des den Wickeldraht führenden Wickelfingers ist. Durch die geringe Anzahl von Modulen zur Bildung des Hauptelements, die teilweise noch identisch ausgeführt werden können, werden sowohl die Herstellungskosten für die Module selbst als auch die Montagekosten für das Hauptelement deutlich reduziert, so dass das Hauptelement gegenüber bekannten Rotoren und Statoren aus SMC-Material deutlich kostengünstiger gefertigt werden kann. Das Hauptelement aus SMC-Material lässt sich gleich gut bei Innen- und Außenläufermaschinen realisieren.

Durch die in den weiteren Ansprüchen aufgeführten Maßnahmen sind vorteilhafte Weiterbildungen und Verbesserungen der im Anspruch 1 angegebenen elektrischen Maschine möglich.

Gemäß einer vorteilhaften Ausführungsform der Erfindung sind die Pole an jedem Jochteil um gleiche Umfangswinkel zueinander versetzt angeordnet, wobei die Jochteile vorzugsweise gleiche axiale Breite aufweisen und mindestens zwei der Module identisch ausgebildet sind. Durch diese Maßnahmen lassen sich die Stückzahlen der mit einer Pressform herstellbaren Module verdoppeln, was die Gestehungskosten reduziert. Jeweils zwei Module werden mit um 180° gegeneinander verdrehten Achsen zum Hauptelement aneinandergesetzt. Bei Motoren größerer Leistung, die ein Hauptelement mit größerer axialer Abmessung aufweisen, wird das Hauptelement aus mehreren, z.B. drei, Modulen zusammengesetzt. Dadurch haben die Jochteile der einzelnen Module eine geringe axiale Breite oder Tiefe, was vorteilhaft für den Pressvorgang ist. Durch die auf mehrere Module aufgeteilten Pole entstehen in den einzelnen Modulen größere Pollücken, was Vorteile bei der maschinellen Bewicklung der Pole mit sich bringt.

Gemäß einer vorteilhaften Ausführungsform der Erfindung weist jeder Pol einen Polschenkel und einen an dessen jochteilfernem Ende angeordneten, damit einstückigen Polschuh auf. Die Polschenkel haben eine der axialen Breite des Jochteils entsprechende axiale Schenkelbreite und die Polschuhe sind so ausgebildet, dass ihre in Umfangsrichtung sich erstreckenden Begrenzungskanten bei zusammengesetzten Modulen miteinander fluchten. Mit dieser Bauweise lässt sich vorteilhaft der Stator einer Außenläufermaschine realisieren, und zwar vorzugsweise mit nur zwei Modulen. Die Polschuhe werden dabei in Achsrichtung asymmetrisch zu den Polschenkeln ausgerichtet, so dass sie einseitig über den Jochteil axial vorstehen und bei zusammengesetzten Modulen mit ihrem Vorstehbereich in den anderen Module eintauchen.

Gemäß einer vorteilhaften Ausführungsform der Erfindung weist jeder Pol einen Polschenkel und einen an dessen freiem Ende angeordneten, damit einstückigen Polschuh auf. Die axiale Breite der Polschenkel ist größer als die axiale Breite des Jochteils und die Jochteile weisen auf ihrer dem jeweils anderen Modul zugekehrten Stirnfläche Auskerbungen zur formschlüssigen Teilaufnahme der Polschenkel im Überstehbereich über den Jochteil des anliegenden Moduls auf. Die Polschuhe sind wiederum zu den Polschenkeln so ausgerichtet, dass ihre im Umfangsrichtung sich erstreckenden Bezugskanten miteinander fluchten. Durch diese Bauweise lässt sich ein Stator einer Außenläufermaschine oder ein Rotor einer Innenläufermaschine mit drei Modulen realisieren, deren Jochteile eine deutlich kleinere axiale Breite aufweisen. Der Querschnitt der Polschenkel und die Flächen der Polschuhe und damit die magnetischen Verhältnisse bleiben gegenüber der zweimoduligen Ausführung unverändert. Die Polschuhe der beiden äußeren Module werden in Achsrichtung gesehen wiederum asymmetrisch zu den Polschuhen ausgerichtet, während die Polschuhe des mittleren Moduls symmetrisch zu den Polschenkeln angeordnet sind. Die Überstehbereiche der Polschuhe über die Jochteile tauchen dann bei zusammengesetzten Modulen jeweils in den benachbarten Modul ein.

Gemäß einer vorteilhaften Ausführungsform der Erfindung stehen in jedem Modul die Pole über mindestens ein Stirnende des Jochteils axial soweit vor, dass die Pole sich bei zusammengesetzten Modulen über die axiale Breite des Rückschlussjochs erstrecken, wobei vorzugsweise ihre axiale Länge aus Gründen der Streufeldreduzierung gleich der axialen Länge der Permanentmagnetsegmente im Rotor ist.

Bei einem aus zwei Modulen zusammengesetzten Hauptelement stehen dabei die Pole einseitig über den Jochteil vor und tauchen mit ihrem Vorstehbereich in den Jochteil des anderen Moduls ein. Bei einer dreimoduligen Zusammensetzung des Hauptelements stehen die Pole der beiden äußeren Module wie bei der zweimoduligen Ausführung einseitig über den jeweiligen Jochteil vor, während beim mittleren Modul die Pole auf beiden Seiten des Jochteils symmetrisch überstehen. Durch diese Bauweise lässt sich vorzugsweise der Stator einer Innenläufermaschine vorteilhaft darstellen. Die Pole können mit oder ohne Polschuhe ausgeführt werden, wobei bei fehlenden Polschuhen zusätzliche mechanische Mittel zum Halten der Polwicklung auf den Polschenkeln vorgesehen werden müssen, so z.B. gemäß einer vorteilhaften Ausführungsform der Erfindung eine konkave Einwölbung an mindestens einem axialen Stirnende der Polschenkel, in die dann die als Ringspule vorgefertigte Polwicklung eingesetzt und auf den Polschenkel aufgeschwenkt und dabei axial geklemmt wird. Bei Abschluss der Polschenkel mit Polschuhen, die randseitig über die Polschenkel vorstehen, entfallen diese zusätzlichen Haltemittel, und die Polwicklung wird direkt auf die Polschenkel aufgewickelt. Hierzu können herkömmliche Wickeltechniken verwendet werden, da der Abstand zwischen den Polen in jedem Modul groß genug ist, um das Durchführen des den Wickeldraht führenden Wickelfingers zu ermöglichen.

### Zeichnung

Die Erfindung ist anhand von in der Zeichnung dargestellten Ausführungsbeispielen in der nachfolgenden Beschreibung näher erläutert. Es zeigen:
- Fig. 1: eine perspektivische Darstellung eines Außenläufermotors,
- Fig. 2: eine Explosionsdarstellung des Außenläufermotors in Fig. 1,
- Fig. 3: eine Explosionsdarstellung eines Außenläufermotors gemäß einem weiteren Ausführungsbeispiel,
- Fig. 4: eine perspektivische Darstellung eines Stators eines Innenläufermotors,
- Fig. 5: eine perspektivische Darstellung eines Moduls des Stators in Fig. 4,
- Fig. 6: eine perspektivische Darstellung eines Moduls eines Stators für einen Innenläufermotor gemäß einem zweiten Ausführungsbeispiel,
- Fig. 7: eine Explosionsdarstellung eines Stators für einen Innenläufermotor gemäß einem dritten Ausführungsbeispiel,
- Fig. 8: eine Ansicht des Stators in Richtung Pfeil VIII in Fig. 7,
- Fig. 9: einen Schnitt längs der Linie IX - IX in Fig. 8,
- Fig. 10: eine perspektivische Darstellung eines Moduls eines Stators für einen Innenläufermotor gemäß einem vierten Ausführungsbeispiel,
- Fig. 11: eine Ansicht des Moduls in Richtung Pfeil XI in Fig. 10,
- Fig. 12: einen Schnitt längs der Linie XII- XII in Fig. 11,
- Fig. 13: eine Explosionsdarstellung eines Stators für einen Innenläufermotor gemäß einem fünften Ausführungsbeispiel,
- Fig. 14: eine perspektivische Darstellung eines Moduls eines Stators für einen Innenläufermotor gemäß einem sechsten Ausführungsbeispiel,
- Fig. 15: eine perspektivische Darstellung des Moduls in Fig. 14 mit nur einem Polschuh und aufgesetzter Polwicklung,
- Fig. 16: die gleiche Darstellung wie in Fig. 15 zur Demonstration des Aufbringens der Polwicklung,
- Fig. 17: eine Explosionsdarstellung eines Stators für einen Innenläufermotor gemäß einem siebten Ausführungsbeispiel.

### Beschreibung der Ausführungsbeispiele

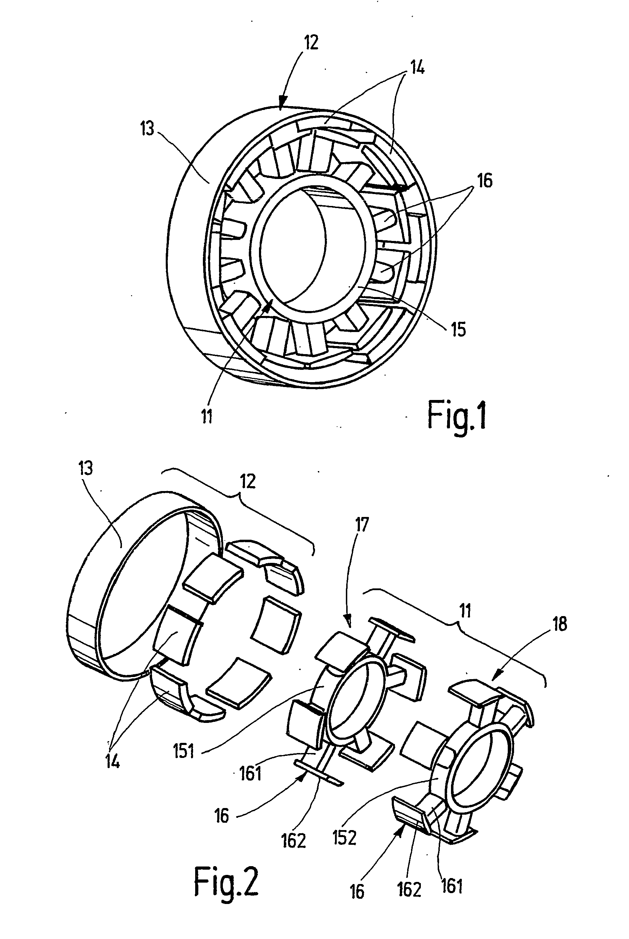

In Fig. 1 und 2 ist ein bürstenloser, achtpoliger Außenläufer-Gleichstrommotor mit einem Stator 11 und einem den Stator 11 konzentrisch umgebenden Rotor 12 in perspektivischer bzw. Explosionsdarstellung gezeigt. Stator 11 und Rotor 12 stellen die sog. Hauptelemente des Motors dar. Der Rotor 12 ist von herkömmlicher Bauart und weist einen massiven oder lamellierten Außenring 13 auf, der an seiner dem Stator 11 zugekehrten Innenfläche acht Permanentmagnetsegmente 14 trägt, die um gleiche Umfangswinkel gegeneinander versetzt angeordnet und abwechselnd gegensinnig polarisiert sind. Der Stator 11 weist ein ringförmiges Rückschlussjoch 15 und insgesamt zwölf Zähne oder Pole 16 auf, die radial nach außen vom Rückschlussjoch 15 abstehen und um gleiche Umfangswinkel zueinander versetzt am Rückschlussjoch 15 mit diesem einstückig angeordnet sind. Jeder Pol 16 weist einen Polschenkel 161 und einen Polschuh 162 auf, der am jochfernen Ende des Polschenkels 161 einstückig mit dem Polschenkel 161 angeordnet ist. Die Polschuhe 162 weisen eine der axialen Breite der Permanentmagnetsegmente 14 entsprechende axiale Länge auf und stehen allseits über die Polschenkel 161 vor, was einerseits eine Flusskonzentration in den Polschenkeln 161 bewirkt und andererseits zur Abstützung einer auf dem Polschenkel 161 aufgewickelten Polwicklung dient. Alle Pole 16 sind mit einer in Fig. 1 und 2 nicht dargestellten Polwicklung belegt, die als konzentrierte Ringspule ausgeführt ist.

Wie aus der Explosionsdarstellung des Motors in Fig. 2 hervorgeht, ist der Stator 11 aus zwei axial aneinanderliegenden, starr miteinander verbundenen Modulen 17, 18 zusammengesetzt. Jedes Modul 17, 18 weist einen in sich geschlossenen, ringförmigen Jochteil 151, 152 des Rückschlussjochs 15 mit jeweils sechs der insgesamt zwölf Pole 16 auf. Entsprechend der Aufteilung der Pole 16 auf die beiden Jochteile 151, 152 sind an jedem Jochteil 151 bzw. 152 die Pole 16 wiederum um gleiche Umfangswinkel zueinander versetzt, wobei der Versatzwinkel doppelt so groß ist wie der Versatzwinkel zwischen den Polen 16 im Stator 11 in Fig. 1. Die Polschuhe 162 der Pole 16 sind asymmetrisch zu den Polschenkeln 161 ausgerichtet und stehen an der einen Stirnseite des Jochteils 151 bzw. 152 über diesen axial vor. Die Module 17, 18 sind aus SMC-Material (Soft Magnetic powder iron Composite) hergestellt, wobei SMC-Eisenpulver in einer Pressform in die in Fig. 2 zu sehende Form der Module 17, 18 gepresst und anschließend für ca. 30 min einer Temperatur von ca. 500°C ausgesetzt wird. Da die beiden Module 17, 18 eine identische Form aufweisen, können sie mit der gleichen Pressform hergestellt werden, so dass sich eine für die Fertigung günstige hohe Stückzahl an Modulen 17, 18 ergibt. Auf alle Pole 16 wird nunmehr eine Polwicklung aufgewickelt, wobei durch den auf das Doppelte vergrößerten Abstand zwischen nebeneinanderliegenden Polen 16 problemlos herkömmliche Wickeltechniken auf herkömmlichen Wickelautomaten angewendet werden können.

Die so bewickelten Module 17, 18 werden mit um 180° gegeneinander verdrehten Modulachsen axial aneinandergesetzt, und zwar so, dass die Polschuhe 162 an den Polen 16 des einen Moduls 17 in die zwischen den Polschuhen 162 des anderen Moduls 18 vorhandenen Lücken eintauchen und umgekehrt. Dabei fluchten durch die bereits erwähnte Ausbildung der Polschuhe 162 die in Umfangsrichtung sich erstreckenden Begrenzungskanten der Polschuhe 162. Die beiden Module 17, 18 werden starr miteinander verbunden, z.B. durch Verkleben oder Verklemmen der aneinanderliegenden, ringförmigen Stirnflächen der Jochteile 151, 152.

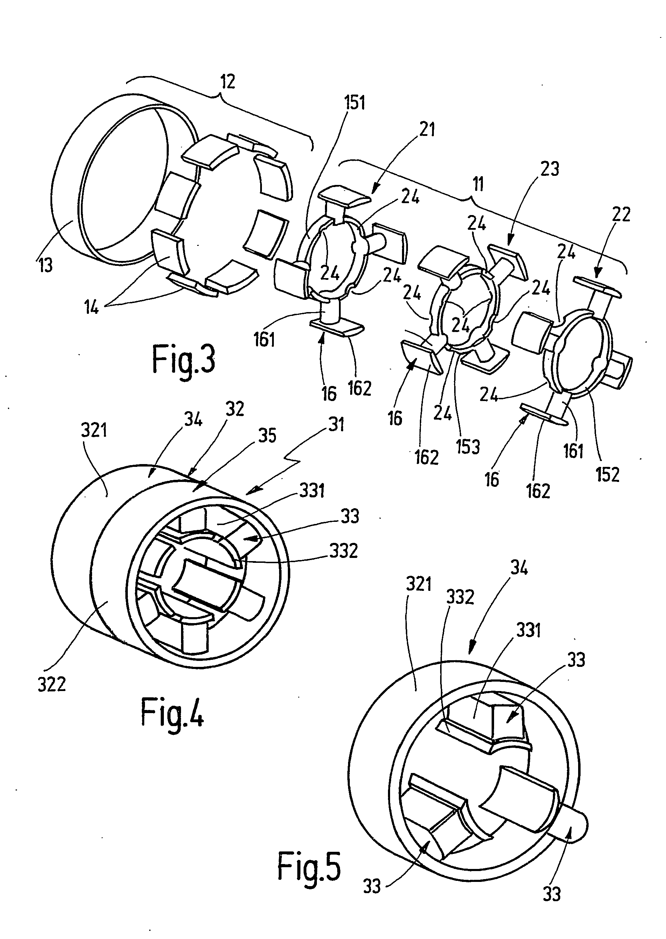

Bei dem in Fig. 3 in Explosionsdarstellung zu sehenden Ausführungsbeispiel eines ebenfalls bürstenlosen, achtpoligen Außenläufer-Gleichstrommotors, wie er in Fig. 1 im Zusammenbau zu sehen ist, ist der Stator 11 aus drei Modulen 21, 22 und 23 zusammengesetzt. Jedes Modul 21 - 23 weist wiederum einen Jochteil 151 - 153 auf, dessen axiale Breite ein Drittel der axialen Breite des Rückschlussjochs 15 beträgt. Jedes Modul 21 - 23 weist nunmehr nur noch vier Pole 16 mit jeweils einem Polschenkel 161 und einem Polschuh 162 auf, die um 90° in Umfangsrichtung gegeneinander versetzt am Rückschlussjoch 15 angeordnet sind. Die Zahl der Pole 16 an jedem Modul 21 - 23 entspricht einem Drittel der Gesamtzahl der Statorpole 16. Die axiale Breite der Polschenkel 161 ist entsprechend den Polen 16 in Fig. 2 beibehalten, so dass nunmehr die Polschenkel 161 axial über die Jochteile 151 - 153 vorstehen. Bei den in Fig. 3 beiden äußeren Modulen 21 und 22 stehen die Polschenkel 161 einseitig über die Jochteile 151, 152 in Achsrichtung vor, während bei dem mittleren Modul 23 die Polschenkel 161 sich beiderseits axial etwas über den Jochteil 153 hinaus erstrecken. Die Polschuhe 162 sind bei den beiden äußeren Modulen 21, 22 wiederum in Achsrichtung asymmetrisch zu den Polschenkel 161 ausgerichtet. Im mittleren Modul 23 sind die Polschuhe 162 symmetrisch zu den Polschenkeln 161 ausgerichtet. Die Jochteile 151, 152 der beiden äußeren Module 21, 22 weisen in ihrer einen ringförmigen Stirnfläche vier konkave Einkerbungen 24 auf, die zur formschlüssigen Aufnahme der Überstehbereiche der Polschenkel 161 des mittleres Moduls 23 dienen. Das mittlere Modul 23 weist jeweils vier konkave Einkerbungen 24 in beiden Stirnflächen des Jochteils 153 auf. Die Einkerbungen 24 dienen zur formschlüssigen Aufnahme der über die Jochteile 151, 152 der beiden äußeren Module 21, 22 überstehenden Polschenkel 161. Auf die Pole 16 der drei Module 21 - 23 werden wieder die Polwicklungen durch direktes Bewickeln der Polschenkel 161 aufgebracht. Alle drei Module 21, 22, 23 sind wiederum aus SMC-Material in der beschriebenen Weise hergestellt, wobei die beiden äußeren Module 21, 22 identisch sind und mit der gleichen Pressform hergestellt werden. Für das mittlere Modul 23 ist eine separate Pressform erforderlich. Die drei bewickelten Module 21, 22, 23 werden in der in Fig. 3 dargestellten Ausrichtung axial aneinandergesetzt und miteinander starr verbunden.'Im Verbund fluchten die in Umfangsrichtung sich erstreckenden Begrenzungskanten der Polschuhe 162.

Der in Fig. 2 und 3 dargestellte Stator 11 kann auch mit einer anderen Polzahl ausgeführt werden. Dabei werden grundsätzlich Statoren mit drei, neun oder fünfzehn Polen aus drei Modulen, von denen zwei identisch sind, und Statoren mit sechs, zwölf oder achtzehn Polen aus nur zwei identischen Modulen zusammengesetzt. Eine entsprechende Aufteilung ist auch bei noch höheren Polzahlen möglich.

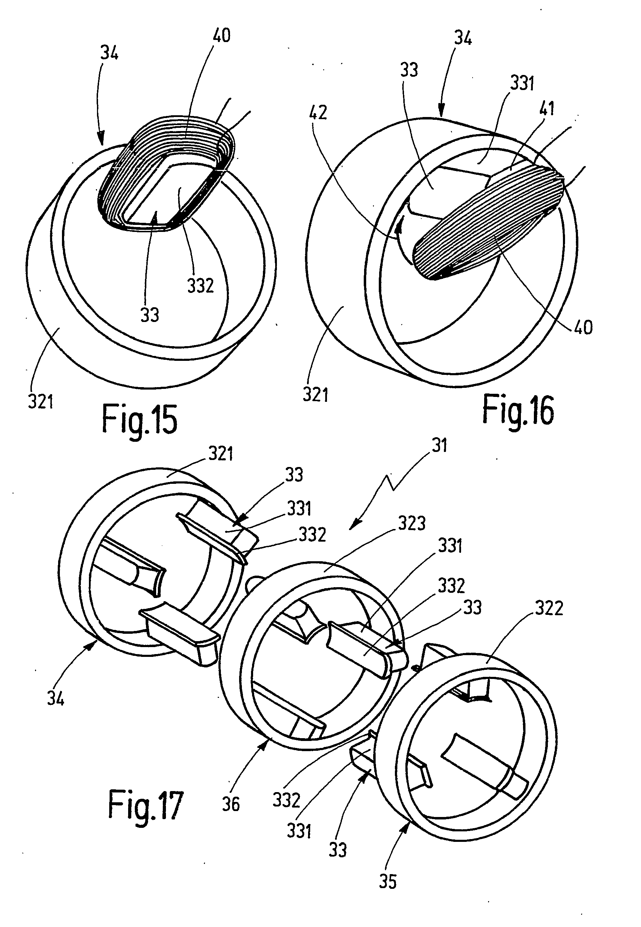

In Fig. 4 ist ein Stator für einen dreiphasigen, vierpoligen Innenläufer-Gleichstrommotor dargestellt. Dieser Stator 31 weist ein zylinder- oder ringförmiges Rückschlussjoch 32 und sechs davon einstückig nach innen radial abstehende Pole 33 auf. Jeder Pol 33 besitzt einen Polschenkel 331 und einen am jochfernen Ende des Polschenkels 331 angeordneten, mit diesem einstückigen Polschuh 332, der allseits über den Polschenkel 331 etwas vorsteht. Auf jedem Polschenkel 331 ist wiederum eine hier nicht dargestellte Polwicklung aufgenommen, wie sie beispielsweise in Fig. 15 und 16 zu sehen ist.

Der Stator 31 ist wiederum aus zwei axial aneinanderliegenden starr miteinander verbundenen Modulen 34, 35 zusammengesetzt. Jedes Modul 34 bzw. 35 weist einen in sich geschlossenen Jochteil 321 bzw. 322 des Rückschlussjochs 32 auf, dessen axiale Breite halb so groß ist wie die des Rückschlussjochs 32. An jedem Jochteil 321, 322 ist die Hälfte der Pole 33 des Stators 31 angeordnet, die wiederum um gleiche Umfangswinkel zueinander versetzt angeordnet sind.

In Fig. 5 ist das eine Modul 34 des Stators 31 mit seinem Jochteil 321 und seinen drei um 120° gegeneinander versetzt angeordneten Polen 33 perspektivisch dargestellt. Das andere Modul 35 ist identisch ausgebildet. Beide Module 34, 35 sind aus SMC-Material in der gleichen Pressform hergestellt. Wie in Fig. 5 zu erkennen ist, stehen in jedem Modul 34, 35 die Pole 33 über ein Stirnende des Jochteils 321 bzw. 322 axial soweit vor, dass sie sich bei zusammengesetzten Modulen 34, 35 über die axiale Breite des Rückschlussjochs 32 erstrecken. Da die axiale Länge des Rückschlussjochs 32 etwas größer gewählt ist als die axiale Länge der Pole 33, sind die axialen Enden der Pole 33 gegenüber den Außenkanten des Rückschlussjochs 32 etwas zurückgesetzt. Die axiale Länge der Polschuhe 332 würde wiederum der axialen Länge der Permanentmagnetsegmente eines Rotors entsprechen. Nach Bewickeln der Pole 33 mit den einzelnen Polwicklungen werden die beiden Module 34, 35 mit um 180° gegeneinander verdrehten Modulachsen axial aneinandergesetzt, wobei die Pole 33 mit ihrem einseitig über die Jochteile 321, 322 vorstehenden Bereich in die Pollücken des jeweils anderen Moduls 35, 34 eintauchen. Die aneinanderliegenden, ringförmigen Stirnflächen der Jochteile 321, 322 werden miteinander verklebt oder in anderer Weise starr miteinander verbunden.

Der in Fig. 17 in Explosionsdarstellung gezeigte Stator 31 für einen Innenläufermotor unterscheidet sich von dem zu Fig. 4 und 5 beschriebenen Motor dadurch, dass er insgesamt neun Pole 33 am Rückschlussjoch 32 trägt und aus insgesamt drei Modulen 34 - 36 zusammengesetzt ist, von denen die beiden äußeren Module 34, 35 identisch ausgebildet sind und im Aufbau dem zu Fig. 5 beschriebenen Modul 34 entsprechen. Das mittlere Modul 36 weist einen Jochteil 323 mit gleicher axialer Breite wie die Jochteile 321, 322 der beiden äußeren Module 34, 35 auf. Am Jochteil 323 sind - wie bei den beiden äußeren Modulen 34, 35 - drei um 120° in Umfangsrichtung versetzt angeordnete Pole 33 einstückig mit dem Jochteil 323 ausgebildet. Die Pole 33, deren axiale Länge etwas kleiner ist als die Summe der axialen Breite der Jochteile 321 - 323 der Module 34 - 36, stehen beidseitig über den Jochteil 323, und zwar symmetrisch, vor. Das mittlere Modul 36 ist ebenfalls aus SMC-Material hergestellt, wobei hierfür allerdings eine separate Pressform erforderlich ist. Die mit den Polwicklungen versehenen Module 34 - 36 werden in der in Fig. 17 dargestellten Ausrichtung axial aneinandergesetzt und die Jochteile 321 - 323 starr miteinander, z.B. durch Kleben, oder Klemmen verbunden.

Für die Statoren 31 in Fig. 4 und 17 gilt auch das zu den Statoren 11 gemäß Fig. 2 und 3 gesagte, nämlich, dass sie mit unterschiedlichen Polzahlen und einer unterschiedlichen Anzahl von Modulen ausgeführt werden können. Auch hier gilt grundsätzlich, dass ein Stator mit sechs, zwölf oder achtzehn Polen 33 bevorzugt aus nur zwei identischen Modulen 34, 35 zusammengesetzt wird, während ein Stator mit drei, neun oder fünfzehn Polen 33 aus jeweils drei Modulen 34, 35, 36 zusammengesetzt wird, wobei zwei der drei Module identisch sind. Auch hier sind höhere Polzahlen möglich.

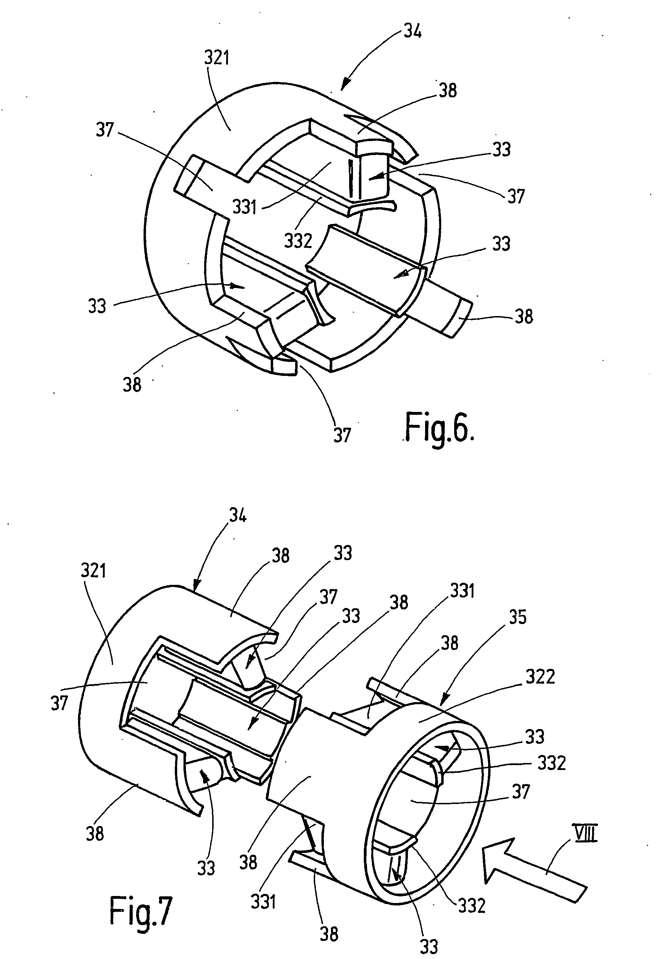

In Fig. 6 ist ein Modul 34 eines Stators 31 dargestellt, der gegenüber dem Modul 34 in Fig. 5 insofern modifiziert ist, als der Jochteil 321 axial sich erstreckende Ausschnitte 37 und axial sich erstreckende Vorsprünge 38 aufweist. Entsprechend der Anzahl der Pole 33 sind drei Ausschnitte 37 und drei Vorsprünge 38 vorhanden, wobei die Vorsprünge 38 die axialen Überstehbereiche der Polschenkel 331 über den Jochteil 321 vollständig überdecken und mit diesem etwa bündig enden. Die Ausschnitte 37 einerseits und die Vorsprünge 38 andererseits sind entsprechend um 120° Umfangswinkel gegeneinander versetzt. Die Ausschnitte 37 sind so ausgeformt, dass die Vorsprünge 38 formschlüssig in diese eintauchen können. Zwei identischen Module 34 werden mit um 180° gegeneinander gedrehten Achsen zu dem Stator 31 axial aneinandergefügt, wobei die Vorsprünge 38 des einen Moduls 34 in die Ausschnitte 37 des anderen Moduls formschlüssig eintauchen. Durch diese alternative Trennung des Rückschlussjochs 32 in die beiden identischen Jochteile 321 und durch die damit erhaltenen Vorsprünge 38 am Jochteil 321, die in Umfangsrichtung etwas über die Polschenkel 331 vorstehen, wird vermieden, dass nach Bewickeln des Moduls 34 mit den Polwicklungen die Polwicklungen beim Zusammenfügen der Module 34 teilweise von den Polschenkeln 331 abgleiten und den Fügevorgang stören, wie dies bei dem in Fig. 5 dargestellten und beschriebenen Modul 34 auftreten kann.

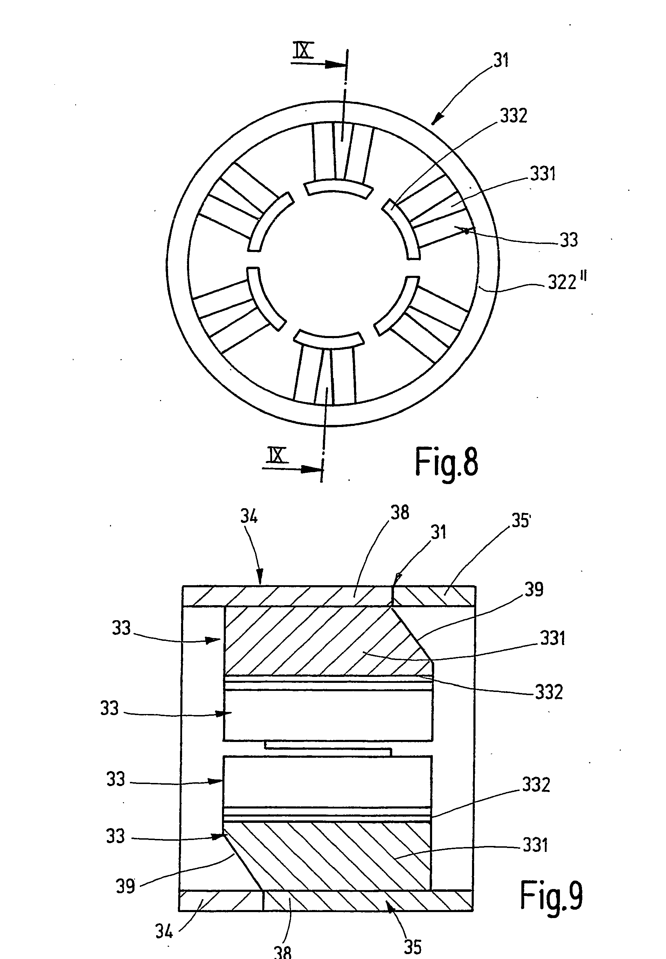

Bei dem in Fig. 7 in Explosionsdarstellung, in Fig. 8 in Draufsicht und in Fig. 9 im Schnitt dargestellten Stator für einen dreiphasigen Innenläufermotor sind die beiden Module 34 und 35 grundsätzlich wie in Fig. 6 ausgebildet. Die beiden Jochteile 321 und 322 weisen wiederum Ausschnitte 37 und Vorsprünge 38 auf, wobei jedoch die axiale Tiefe der Ausschnitte 37 geringer bemessen ist als bei dem Modul 34 in Fig. 6. Entsprechend kürzer sind die Vorsprünge 38, die bei Zusammensetzung der Module 34, 35 formschlüssig in die Ausschnitte 37 eintauchen. Um dem vorstehend beschriebenen Problem des Abrutschens der Polwicklungen von den Polschenkeln 331 zu begegnen, ist die radiale Schenkelhöhe der Polschenkel 331 in deren über die Vorsprünge 38 noch hinaus sich erstreckenden Endabschnitten stetig verjüngt, wobei die dadurch entstehende Schrägfläche 39 sich von dem jochteilseitigen Schenkelende bis zum polschuhseitigen Schenkelende erstreckt. Die Verjüngung der über die Vorsprünge 38 hinaus sich erstreckenden Endabschnitte der Polschenkel 331 und die sich dadurch ergebenden Schrägflächen 39 sind in der Schnittdarstellung der Fig. 9 besonders gut zu sehen. Der Vorteil dieser konstruktiven Ausführung liegt darin, dass die Jochteile 321, 322 am Fuße der Ausschnitte 37 eine größere axiale Stegbreite aufweisen und dadurch die Module 34, 35 günstiger für die Pressherstellung ausgelegt sind.

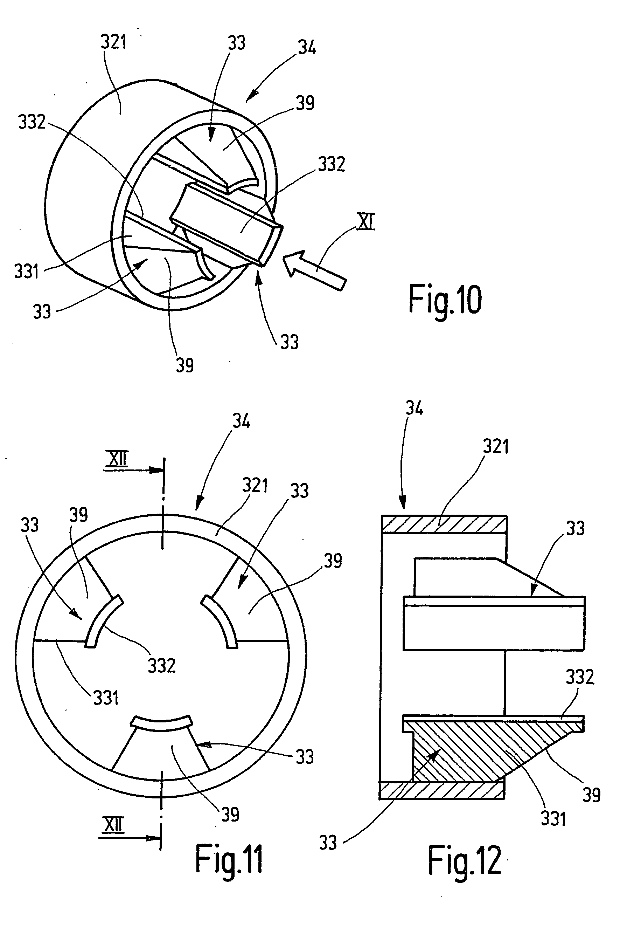

Bei dem in Fig. 10 dargestellten Modul 34 ist auf eine axial versetzte Trennung der Jochteile verzichtet und die identisch ausgebildeten Module 34 mit ihren parallelen, ringförmigen Stirnflächen plan aneinandergesetzt. In jedem Modul 34 ist die axiale Breite des Jochteils 321 gleich. Um dem angesprochenen Problem des Abrutschens der Polwicklungen im Überstehbereich der Pole 33 über den Jochteil 321 hinaus zu begegnen, sind die Polschenkel 331 in diesem Überstehbereich wiederum in ihrer radialen Schenkelhöhe stetig reduziert. Da dieser Überstehbereich die Hälfte der axialen Länge der Pole 33 ausmacht, ist die so entstehende Schrägfläche 39 wesentlich flacher als bei der Ausführung des Moduls 34 bzw. 35 in Fig. 7 - 9.

Wird der in Fig. 17 dargestellte Stator 31 aus den drei Modulen 34 - 36 zusammengesetzt, die wie in Fig. 17 dargestellt ausgeführt sind, und bei diesen Modulen die über die Jochteile 321 - 323 überstehenden Bereich der Pole 33 mit sich verjüngender, radialer Schenkelhöhe ausgeführt, wie dies bei Fig. 10 - 12 gezeigt ist, so sind abweichend von den äußeren Modulen 34, 35 in dem mittleren Modul 36 die Pole 33 in beiden, symmetrisch über den Jochteil 323 vorstehenden Überstehbereichen mit den beschriebenen, durch die Polschenkelverjüngung entstehenden Schrägflächen 39 versehen.

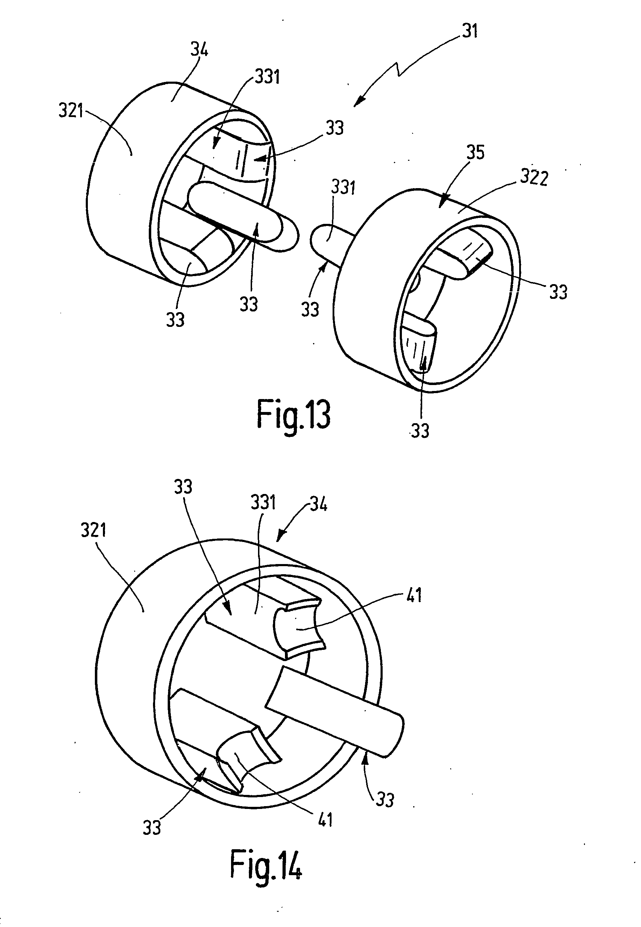

In Fig. 13 ist ein Stator 31 dargestellt, der gegenüber dem zu Fig. 4 beschriebenen Stator nur insoweit modifiziert ist als die Pole 33 ohne Polschuhe 332 ausgeführt sind. Zur Bewicklung dieses Stators 31 werden die Polwicklungen als vorgefertigte Ringspulen ausgeführt, wie eine in Fig. 15 und 16 dargestellt ist. Die Ringspulen werden auf die Polschenkel 331 aufgeschoben und mit geeigneten mechanischen Mitteln gegen Abgleiten gesichert. Im übrigen wird auf die Beschreibung des Stators 31 zu Fig. 4 verwiesen, wobei in Fig. 13 gleiche Bauteile mit zu Fig. 4 übereinstimmenden Bezugszeichen gekennzeichnet sind.

In dem in Fig. 14 - 16 dargestellten Modul 34 für einen solchen Stator 31 ist ein Beispiel für die Mittel zur mechanischen Festlegung der Polwicklung 40 auf den polschuhlosen Polen 33 dargestellt. Jeder Polschenkel 331 der Pole 33 weist an seinem einen Axialende, das über den Jochteil 321 axial vorsteht, eine konkave Einwölbung 41 auf, in der die Polwicklung 40 gehalten ist. In Fig. 15 und 16 ist anhand einer Polwicklung 40 deren Montage dargestellt. Die als Ringspule vorgefertigte Polwicklung 40 wird in die Einwölbung 41 eingesetzt und dann in Pfeilrichtung 42 in Fig. 16 über den Polschenkel 331 geschwenkt, wobei eine axiale Klemmkraft entsteht, die die Polwicklung 40 auf dem nicht mit einer Einwölbung 41 versehenen, anderen axialen Ende des Polschenkels 331 kraftschlüssig festlegt. Eine gewisse Klemmwirkung kann auch an den Längsseiten der Polschenkel 331 erzielt werden. Im übrigen entspricht das in Fig. 14 dargestellte Modul 34 dem in Fig. 13 dargestellten Modul 34.

## Patentansprüche

1. Elektrische Maschine mit einem feststehenden Hauptelement als Stator (11) und einem rotierenden Hauptelement als Rotor (12), von denen ein Hauptelement mit einem Rückschlussjoch (15) und davon radial abstehenden Polen (16) vorgegebener Polzahl aus SMC-(Soft Magnetic powder iron Composite) Material hergestellt ist und auf jedem Pol (16) eine Polwicklung trägt, **dadurch gekennzeichnet, dass** das eine Hauptelement aus mindestens zwei axial aneinanderliegenden, starr miteinander verbundenen, jeweils aus SMC-Material hergestellten Modulen (17, 18) zusammengesetzt ist, und dass jedes Modul (17, 18; 21, 22, 23; 34, 35; 34, 35, 36) einen in sich geschlossenen Jochteil (151, 152; 151, 152, 153; 321, 322; 321, 322, 323) des Rückschlussjochs (15; 32) mit einer gleichen Teilzahl von daran einstückig angesetzten Polen (16; 33) aufweist, die einem durch die Modulzahl bestimmten Bruchteil der Polzahl entspricht.

2. Maschine nach Anspruch 1, **dadurch gekennzeichnet, dass** die Pole (16) an jedem Jochteil (151 - 153; 321 - 323) um gleiche Umfangswinkel zueinander versetzt angeordnet sind.

3. Maschine nach Anspruch 1 oder 2, **dadurch gekennzeichnet, dass** die Module (17, 18; 21 - 23; 34 - 36) eine gleiche axiale Jochteilbreite aufweisen.

4. Maschine nach einem der Ansprüche 1 - 3, **dadurch gekennzeichnet, dass** mindestens zwei der Module (17, 18; 21, 22; 34, 35) identisch ausgebildet sind.

5. Maschine nach einem der Ansprüche 1 - 4, **dadurch gekennzeichnet, dass** jeder Pol (16) einen Polschenkel (161) und einen an dessen jochteilfernem Ende angeordneten, damit einstückigen Polschuh (162) aufweist, dass die Polschenkel (161) eine der axialen Breite des Jochteils (151, 152) entsprechende axiale Schenkelbreite aufweisen und dass die Polschuhe (162) so ausgebildet sind, dass ihre in Umfangsrichtung sich erstreckenden Begrenzungskanten bei aneinanderliegenden Modulen (17, 18) fluchten.

6. Maschine nach einem der Ansprüche 1 - 4, **dadurch gekennzeichnet, dass** jeder Pol (16) einen Polschenkel (161) und einen an dessen jochteilfernem Ende angeordneten, damit einstückigen Polschuh (162) aufweist, dass die Polschenkel (161) eine axiale Schenkelbreite aufweisen, die größer ist als die axiale Breite des Jochteils (151, 152, 153), dass der Jochteil (151, 152, 153) auf seiner dem anderen Modul (21 - 23) zugekehrten Stirnfläche Einkerbungen (24) zur formschlüssigen Teilaufnahme der Polschenkel (161) des anliegenden Moduls (34 - 36) aufweist und dass die Polschuhe (162) zu den Polschenkeln (161) so ausgerichtet sind, dass ihre im Umfangsrichtung sich erstreckenden Begrenzungskanten bei aneinanderliegenden Modulen (21 - 23) fluchten.

7. Maschinen nach einem der Ansprüche 1 - 4, **dadurch gekennzeichnet, dass** in jedem Modul (34, 35) die Pole (33) über mindestens ein Stirnende des Jochteils (321, 322, 323) axial soweit vorstehen, dass bei aneinanderliegenden Modulen (34, 35; 34, 35, 36) die Pole (33) sich über die axiale Breite des Rückschlussjochs (32) erstrecken, vorzugsweise mit ihren Enden gegenüber den Außenkanten des Rückschlussjochs (32) etwas axial zurückgesetzt sind.

8. Maschine nach Anspruch 7, **dadurch gekennzeichnet, dass** jeder Pol (33) einen Polschenkel (331) und einen an dessen jochteilfernem Ende einstückig mit dem Polschenkel (331) angeordneten, den Polschenkel (331) überragenden Polschuh (332) aufweist.

9. Maschine nach einem der Ansprüche 1 - 4, **dadurch gekennzeichnet, dass** der Jochteil (321, 322) eines jeden von zwei aneinander angesetzten Modulen (34, 35) axial sich erstreckende Ausschnitte (37) und axial sich erstreckende Vorsprünge (38) aufweist, deren Anzahl jeweils der Polzahl der Module (34, 35) entspricht, und dass bei aneinandergesetzten Modulen (34, 35) die Vorsprünge (38) des einen Jochteils (321, 322) in die Ausschnitte (37) des anderen Jochteils (321, 322) jeweils formschlüssig eingreifen.

10. Maschine nach Anspruch 9, **dadurch gekennzeichnet, dass** an jedem Modul (34, 35) die Vorsprünge (38) die über den Jochteil (321, 322) axial überstehenden Schenkelabschnitte der Polschenkel (331) vollständig überdecken und mit deren freien Ende etwa bündig abschließen.

11. Maschine nach Anspruch 9, **dadurch gekennzeichnet, dass** die Vorsprünge (38) nur einen Teil der axial über den Jochteile (321, 322) überstehenden Schenkelabschnitte der Polschenkel (331) überdecken und die über die Vorsprünge (38) sich hinaus erstreckenden Endbereiche der Polschenkel (331) sich in der radialen Schenkelhöhe zum freien Ende hin stetig verjüngen.

12. Maschine nach Anspruch 8, **dadurch gekennzeichnet, dass** die radiale Schenkelhöhe der über den Jochteil (321, 322) axial vorstehenden Schenkelabschnitte der Polschenkel (331) sich zum freien Ende hin stetig verjüngt.

13. Maschine nach Anspruch 7, **dadurch gekennzeichnet, dass** die Pole (33) Polschenkel (331) aufweisen, die in ihrem in ein angrenzendes Modul (321) eintauchenden Stirnende jeweils eine über die radiale Schenkelhöhe sich erstreckende konkave Einwölbung (41) aufweisen.

## Claims

1. Electrical machine having a stationary main element as the stator (11) and a rotating main element as the rotor (12), of which one main element, which has a return path yoke (15) and a predefined number of poles (16) which project radially from the said return path yoke, is produced from SMC (Soft Magnetic powder iron Composite) material and is fitted with a pole winding on each pole (16), **characterized in that** the one main element is composed of at least two modules (17, 18) which bear axially one on the other, are rigidly connected to one another and are each produced from SMC material, and **in that** each module (17, 18; 21, 22, 23; 34, 35; 34, 35, 36) has an intrinsically closed yoke part (151, 152; 151, 152, 153; 321, 322; 321 322, 323) of the return path yoke (15; 32) with an identical ratio of integrally mounted poles (16; 33) which corresponds to a fraction of the number of poles which is determined by the number of modules.

2. Machine according to Claim 1, **characterized in that** the poles (16) on each yoke part (151-153; 321-323) are arranged in a manner offset in relation to one another by the same circumferential angle.

3. Machine according to Claim 1 or 2, **characterized in that** the modules (17, 18; 21-23; 34-36) have an identical axial yoke part width.

4. Machine according to one of Claims 1-3, **characterized in that** at least two of the modules (17, 18; 21, 22; 34, 35) are of identical design.

5. Machine according to one of Claims 1-4, **characterized in that** each pole (16) has a pole limb (161) and a pole shoe (162) which is arranged in an integral manner at that end of the said pole limb which is remote from the yoke part, **in that** the pole limbs (161) have an axial limb width which corresponds to the axial width of the yoke part (151, 152), and **in that** the pole shoes (162) are designed such that the boundary edges of the said pole shoes extend in the circumferential direction and are in alignment when the modules (17, 18) bear one against the other.

6. Machine according to one of Claims 1-4, **characterized in that** each pole (16) has a pole limb (161) and a pole shoe (162) which is arranged in an integral manner at that end of the said pole limb which is remote from the yoke part, **in that** the pole limbs (161) have an axial limb width which is greater than the axial width of the yoke part (151, 152, 153), **in that** the yoke part (151, 152, 153) has, on its end face which is directed towards the other module (21-23), notches (24) for partially accommodating the pole limbs (161) of the adjoining module (34-36) in an interlocking manner, and **in that** the pole shoes (162) are oriented in relation to the pole limbs (161) such that the boundary edges of the said pole shoes extend in the circumferential direction and are in alignment when the modules (21-23) bear one against the other.

7. Machine according to one of Claims 1-4, **characterized in that**, in each module (34, 35), the poles (33) project axially beyond at least one end of the yoke part (321, 322, 323) to such an extent that, when the modules (34, 35; 34, 35, 36) bear one against the other, the poles (33) extend over the axial width of the return path yoke (32), preferably with the ends of the said poles being axially recessed to some extent in relation to the outer edges of the return path yoke (32).

8. Machine according to Claim 7, **characterized in that** each pole (33) has a pole limb (331) and a pole shoe (332) which, at that end of the said pole limb which is remote from the yoke part, is arranged integrally with the pole limb (331) and projects beyond the pole limb (331).

9. Machine according to one of Claims 1-4, **characterized in that** the yoke part (321, 322) of one of each of two modules (34, 35) which are mounted one on the other has axially extending cutouts (37) and axially extending projections (38), the number of the said cutouts and projections in each case corresponding to the number of poles of the modules (34, 35), and **in that**, when the modules (34, 35) are mounted one on the other, the projections (38) of one yoke part (321, 322) engage in the cutouts (37) in the other yoke part (321, 322) in an interlocking manner in each case.

10. Machine according to Claim 9, **characterized in that**, on each module (34, 35), the projections (38) completely overlap those limb sections of the pole limbs (331) which project axially beyond the yoke part (321, 322), and terminate approximately flush with the free ends of the said limb sections.

11. Machine according to Claim 9, **characterized in that** the projections (38) overlap only a portion of those limbs sections of the pole limbs (331) which project axially beyond the yoke part (321, 322), and the end regions of the pole limbs (331) which extend beyond the projections (38) taper continuously towards the free end in terms of the radial limb height.

12. Machine according to Claim 8, **characterized in that** the radial limb height of those limb sections of the pole limbs (331) which project axially beyond the yoke part (321, 322) tapers continuously towards the free end.

13. Machine according to Claim 7, **characterized in that** the poles (33) have pole limbs (331) which, at the ends thereof which enter an adjoining module (321), in each case have a concave curved portion (41) which extends over the radial limb height.

## Revendications

1. Machine électrique qui présente un élément principal stationnaire servant de stator (11) et un élément principal rotatif servant de rotor (12), dont un élément principal est réalisé avec une culasse de fermeture (15) et un nombre prédéterminé de pôles (16) qui en débordent radialement en un matériau SMC ("soft magnetic powder iron composite" - composite de poudre de fer magnétique doux) et porte sur chaque pôle (16) un enroulement polaire,
**caractérisée en ce que**
un des éléments principaux est constitué de l'assemblage d'au moins deux modules (17, 18) adjacents axialement, reliés solidairement l'un à l'autre et chacun constitué d'un matériau SMC et
**en ce que** chaque module (17, 18; 21, 22, 23; 34, 35; 34, 35, 36) présente une partie intrinsèquement fermée (151, 152; 151, 152, 153; 321, 322; 321, 322, 323) de la culasse de fermeture (15; 32) sur laquelle sont placés d'un seul tenant un même nombre partiel de pôles (16; 33) qui correspond à une fraction, définie par le nombre de modules, du nombre de pôles.

2. Machine selon la revendication 1, **caractérisée en ce que** les pôles (16) sont décalés les uns par rapport aux autres d'un même angle périphérique sur chaque partie (151 - 153; 321 - 323) de culasse.

3. Machine selon la revendication 1 ou 2, **caractérisée en ce que** les modules (17, 18; 21 - 23; 34 - 36) présentent une même largeur axiale de partie de culasse.

4. Machine selon l'une des revendications 1 à 3, **caractérisée en ce qu'**au moins deux des modules (17, 18; 21, 22; 34, 35) ont des configurations identiques.

5. Machine selon l'une des revendications 1 à 4, **caractérisée en ce que** chaque pôle (16) présente une branche de pôle (161) et un sabot de pôle (162) formé d'un seul tenant avec elle et disposé à l'extrémité éloignée de la partie de culasse, **en ce que** les branches de pôles (161) présentent une largeur qui correspond à la largeur axiale de la partie de culasse (151, 152) et **en ce que** les sabots polaires (162) sont configurés de telle sorte que leurs arêtes frontières qui s'étendent dans la direction périphérique sont alignées lorsque les modules (17, 18) sont posés l'un contre l'autre.

6. Machine selon l'une des revendications 1 à 4, **caractérisée en ce que** chaque pôle (16) présente une branche de pôle (161) et un sabot de pôle (162) formé d'un seul tenant avec elle et disposé à l'extrémité éloignée de la partie de culasse, **en ce que** les branches de pôles (161) présentent une largeur axiale de branche plus grande que la largeur axiale de la partie de culasse (151, 152, 153), **en ce que** la partie de culasse (151, 152, 153) présente sur sa surface frontale tournée vers l'autre module (21 - 23) des entailles (24) qui permettent de reprendre partiellement en correspondance géométrique les branches de pôles (161) du module (34 - 36) adjacent et **en ce que** les sabots polaires (162) sont orientés par rapport aux branches polaires (161) de telle sorte que leurs arêtes frontières qui s'étendent dans la direction périphérique soient alignées lorsque les modules (21 - 23) reposent l'un contre l'autre.

7. Machine selon l'une des revendications 1 à 4, **caractérisée en ce que** dans chaque module (34, 35), les pôles (33) débordent axialement au-delà d'au moins une extrémité frontale de la partie de culasse (321, 322, 323) de telle sorte que lorsque les modules (34, 35; 34, 35, 36) reposent l'un contre l'autre, les pôles (33) s'étendent au-delà de la largeur axiale de la culasse de fermeture (32) et que leurs extrémités soient de préférence en léger recul axial par rapport aux arêtes extérieures de la culasse de fermeture (32).

8. Machine selon la revendication 7, **caractérisée en ce que** chaque pôle (33) présente une branche de pôle (331) et un sabot polaire (332) disposé à son extrémité éloignée de la partie de culasse, formé d'un seul tenant avec la branche de pôle (331) et qui déborde au-delà de la branche de pôle (331).

9. Machine selon l'une des revendications 1 à 4, **caractérisée en ce que** la partie de culasse (321, 322) d'un module (34, 35) sur deux présente des découpes (37) qui s'étendent axialement et des saillies (38) qui s'étendent axialement et dont le nombre correspond chaque fois au nombre de pôles des modules (34, 35) et **en ce que** lorsque les modules (34, 35) sont placés les uns contre les autres, les saillies (38) d'une des parties de culasse (321, 322) s'engagent dans les découpes (37) de l'autre partie de culasse (321, 322), chaque fois en correspondance géométrique.

10. Machine selon la revendication 9, **caractérisée en ce que** sur chaque module (34, 35), les saillies (38) recouvrent complètement les parties des branches de pôles (331) qui débordent axialement au-delà de la partie de culasse (321, 322) et se raccordent sensiblement à chant par leur extrémité libre.

11. Machine selon la revendication 9, **caractérisée en ce que** les saillies (38) ne recouvrent aucune partie des parties des branches de pôles (331) qui débordent axialement au-delà de la partie de culasse (321, 322) et **en ce que** les parties d'extrémité des branches de pôles (331) qui s'étendent au-delà des saillies (38) se rétrécissent de manière continue suivant la hauteur radiale de la branche en direction de l'extrémité libre.

12. Machine selon la revendication 8, **caractérisée en ce que** la hauteur radiale des parties des branches de pôles (331) qui débordent axialement au-delà de la partie de culasse (321, 322) se rétrécit de manière continue jusqu'à l'extrémité libre.

13. Machine selon la revendication 7, **caractérisée en ce que** les pôles (33) présentent des branches de pôles (331) qui au niveau de leur extrémité frontale qui s'enfonce dans un module adjacent (321) présentent toutes un bombage (41) concave qui s'étend au-delà de la hauteur radiale de la branche.
